# EUROPEAN PATENT SPECIFICATION

(11) **EP 3 819 726 B1**
(45) Date of publication and mention of the grant of the patent: **26.08.2026**
(21) Application number: 19208198.2
(22) Date of filing: 08.11.2019
(51) Int. Cl.: G05B 19/042, A01B 61/02, A01F 15/00, B60K 17/28, A01F 15/08, F16H 57/04

(54) **AGRICULTURAL SYSTEM**
LANDWIRTSCHAFTLICHES SYSTEM
SYSTÈME AGRICOLE

(43) Date of publication of application: 12.05.2021
(73) Proprietor: CNH Industrial Belgium NV, 8210 Zedelgem (BE)
(72) Inventor: Pauwels, Karel C.F., B-8770 Ingelmunster (BE); Demon, Frederik, 8310 Brugge (Sint-Kruis) (BE); De Lathauwer, Tom A., 9340 Lede (BE); Bonte, Xavier G J M, 4505 PB Zuidzande (NL)
(74) Representative: CNH Industrial IP Department

(56) References cited:
- EP-A1- 2 986 101
- DE-A1- 102017 210 746
- US-B1- 6 715 597

## Description

### Background of the Disclosure

The invention relates to an agricultural baling system comprising an agricultural baler, particularly but not exclusively a baler implement. Other aspects of the invention concern to a method of controlling an agricultural.

Baling machines are well known in agriculture and are widely used to bale plant matter in fields into bales that may be conveniently and effectively handled, stored and used. Baling machines are known that bale forage products such as grass and other leaves used as hay or other types of animal feed; straw or other plant parts resulting as by-products from a harvesting operation such as combine harvesting; cotton; and other plant parts of commercial or other value.

The majority of baling machines in use in Europe are designed to be towed behind an agricultural tractor or another towing vehicle that, under the control of an operator and/or using operator-monitored software, moves the baling machine about a field and provides power to operate internal parts of the baling machine. The provision of power is effected by way of a rotatable power take-off (PTO) shaft connected to the rotary power take-off that typically is part of the tractor.

Known designs of agricultural baling machine include a pick-up, mounted at the front of the machine, that causes the ingestion of plant matter into the interior of the machine as it moves about a field. Differing internal designs of baler components are known in the part of the machine downstream of the pick-up.

One commonplace type of baling machine is often referred to as a *"rectangular baler".* This includes a cuboidal bale-forming chamber in which the ingested plant matter is compacted into a cuboidal shape by a piston or plunger that reciprocates longitudinally back and forth inside the bale-forming chamber between retracted and extended positions. Charges of plant matter repeatedly are fed into the bale-forming chamber from the pick-up by the mechanism of the baling machine. This action is timed with the motion of the plunger such that feeding of plant matter coincides with retraction of the plunger to one end of the bale-forming chamber. The plant matter then is compacted by subsequent extension strokes of the plunger along the bale-forming chamber.

The reciprocal rectilinear motion of the plunger is effected using a driveline that converts rotary drive derived from the rotating PTO shaft, connected to the baling machine above the pick-up, into reciprocal motion of the plunger. This typically is achieved by changing, in the driveline, the axis of the rotation from one parallel to the longitudinal length of the baling machine to an axis of rotation transverse thereto.

Such transverse-axis rotation is applied to a crank that is pivot-jointed to one end of a conrod the other end of which is pivot-jointed to the plunger, that is moveably captive inside the bale-forming chamber. As a result, rotation of the crank causes the reciprocal movement of the plunger.

The driveline between the power take-off of the tractor and the plunger includes a clutch that in a typical case is formed of two or more dry friction plates that are urged into mutual engagement by a hydraulic actuator or spring arrangement. Additionally a heavy flywheel (that in some baling machine designs weighs 600 kg or more) is secured to a rotatable shaft that defines or is connected to an input shaft in turn connected in use to the PTO shaft.

The flywheel is needed because the plunger during its motion is associated with very high, and highly varying, levels of power that might peak at 1500 Hp (about 1100 kW). In the absence of the flywheel it might be impossible for the rotary power take-off of a tractor to provide sufficient power to move the plunger, and very high forces might be transmitted back towards the tractor via the PTO shaft potentially causing damage to the baling machine or tractor or making the tractor-baling machine combination difficult to control.

The flywheel has high levels of inertia and, in order to prevent injuries and unnecessary wear of the flywheel shaft bearings, it is desirable to stop rotation of the flywheel as swiftly as possible once the PTO shaft has stopped providing power to the agricultural baler (e.g. when the tractor engine is turned off). Some balers include brakes for actively stopping the flywheel when the baler is deactivated.

Engagement of the clutches mentioned above and/or activation of the flywheel brake may generate excessive amounts of heat that are typically dissipated by using cooling fluid provided to the clutches and the brakes. Such cooling fluid is provided by large cooling pumps that are sized to provide sufficient amounts of cooling fluid to the above components at all stages of the baler operation. The initial costs and operating costs associated with such cooling pumps are high.

DE 102017210746 A1 discloses a method for cooling a power take-off clutch in the event of an aborted start-up due to excessive start-up load, the power take-off clutch being closed in a hydraulically pressurized state and being opened in a hydraulically depressurized state, the power take-off clutch being cooled in the pressurized state by means of cooling oil by mechanically releasing an oil supply channel for supplying cooling oil, whereby the power take-off clutch is not cooled in the pressureless state by mechanically closing the oil supply channel and whereby the power take-off clutch is automatically switched to the depressurized state when the power take-off shaft is blocked. The disclosed method is characterized in that when the power take-off shaft is blocked, a power take-off gear is shifted into a neutral position and the power take-off clutch is automatically put into the pressurized state or that when the power take-off shaft is blocked, the power take-off clutch is only subjected to a hydraulic application pressure at which the power take-off clutch is closed without force.

EP 2986101 A1 discloses and agricultural baler comprising a flywheel that is connected via a cardan coupling to a PTO of a tractor, the cardan coupling comprising a torque limiter adapted for disengaging the flywheel from the PTO when a predetermined torque is exceeded, wherein the cardan coupling further comprises transmission means that are switchable between a startup state and a running state, in the startup state the transmission means being configured to only partially transmit rotational movement of the PTO to the flywheel while in the running state the transmission means is configured to fully transmit rotational movement of the PTO to the flywheel.

US 6715597 B1 discloses a method of controlling the temperature of the clutches of a dual-clutch transmission, which includes the steps of providing a predetermined flow of cooling fluid to at least one clutch of the dual-clutch transmission for controlling bulk clutch temperature, monitoring the temperature of the cooling fluid at the clutch, and changing the flow of the cooling fluid to the clutch as a function of a change in the bulk clutch temperature.

The invention seeks to solve or ameliorate one or more problems of prior art baling machines.

Embodiments of the disclosure are suitable for inclusion in all baling machine types and machinery combinations disclosed herein. The disclosure of embodiments or parts of embodiments herein includes their disclosure in combination with all baling machine types and machinery combinations herein, even if these are indicated as forming part of the prior art.

The terms *"baling machine"* and *"baler"* are used synonymously herein and in the art generally.

The term *"power take-off"* is synonymous with the acronym *"PTO".*

The term *"tractor"* embraces a wide variety of machines potentially capable of towing a baling machine, as will be known to the person of skill in the art.

The term *"clutch"* except as otherwise explained embraces any design of clutch that is suitable for transferring drive in the circumstances described.

The term *"plant matter"* and derivatives potentially includes all types of matter that potentially may be ingested into a baling machine for the purpose of being formed into bales.

The terms *"piston"* and *"plunger"* in the context of the principal, moveable, bale-forming part of a bale-forming chamber are used synonymously herein.

### Summary of the Disclosure

Aspects and embodiments of the invention provide an agricultural baler, agricultural machinery and a method for controlling an agricultural baler as claimed in the appended claims.

According to a first aspect of the invention there is provided an agricultural system comprising an agricultural baler comprising a driveline, a rotatable flywheel and a rotary input shaft, the rotary input shaft being connectable by way of a baler driveline to the rotatable flywheel, the driveline comprising first and second heat generating components; a cooling fluid supply circuit comprising at least one pump for supplying cooling fluid to the first and second heat-generating components; and a control unit that is configured to: receive driveline data indicative of a current and/or future status of at least one heat-generating component of the driveline; determine a control signal for controlling an amount of cooling fluid flow provided to the first and second heat-generating components, on the basis of the driveline data; and provide the control signal to the cooling fluid supply circuit, wherein the control unit is configured to: determine a desired distribution of a cooling fluid flow provided by the pump between the first and second heat-generating components, on the basis of the driveline data; and determine the control signal on the basis of the desired distribution of cooling flow; wherein the fluid supply circuit has a first fluid supply mode, in which at least one heat-generating component of the driveline is supplied with cooling fluid at first cooling fluid flow rate, and a second fluid supply mode, in which the at least one heat-generating component is supplied with cooling fluid at a second cooling fluid flow rate, and wherein the first cooling fluid flow rate is higher than the second cooling fluid flow rate; and the control signal puts the fluid supply circuit in the first fluid supply mode or the second fluid supply mode, characterised in that the first cooling fluid flow rate is between 4 and 10 times higher than the second cooling fluid flow rate; and in that the cooling fluid supply circuit includes two fluid flow control components that are flow reducing devices and are respectively capable of being bypassed by the cooling fluid flowing in the fluid supply circuit.

In another embodiment, the at least one heat-generating component comprises a clutch, wherein the driveline data comprises a current and/or future engagement status of the clutch.

In another embodiment, the driveline includes a transmission including driveline components defining at least first and second selectable transmission ratios between the input shaft and the flywheel, and the clutch is useable for selecting the first and/or second selectable transmission ratios.

In another embodiment, the at least one heat-generating component comprises a brake, and the dreiveline data comprises a current and/or future activation status of the brake.

In another embodiment, the driveline data comprises input power data indicative of external input power provided to the agricultural baler.

In another embodiment, the driveline data comprises transmission-control signals indicative of a requested change in transmission ratio.

In another embodiment, the driveline data comprises engagement data indicative of an engagement status of the at least one heat-generating component.

In another embodiment, the driveline data comprises safety stop data indicative of safety shut downs required due to a baler failure.

In another embodiment, the first cooling fluid flow rate is between 22 I/min and 25 I/min, and/or the second cooling fluid flow rate is between 3 I/min and 5 I/min.

In another embodiment in the first fluid supply mode, the first heat-generating component is supplied with cooling fluid at the first cooling fluid flow rate and the second heat-generating component is supplied with cooling fluid at the second cooling fluid flow rate, and/or, in the second fluid supply mode, the first heat-generating component is supplied with cooling fluid at the second cooling fluid flow rate and the second heat-generating component is supplied with cooling fluid at the first cooling fluid flow rate.

In another embodiment the fluid supply circuit comprises a third fluid supply mode, in which the first and the second heat-generating components are supplied with cooling fluid at substantially the same cooling flow rate, particularly the second cooling flow rate, wherein the control signal is useable for putting the fluid supply circuit in the third fluid supply mode.

In another embodiment the pump is a fixed displacement pump.

In another embodiment the agricultural system comprises an agricultural work vehicle connected to the agricultural baler.

According to another aspect of the invention there is provided a computer-implemented method for controlling an agricultural baler, the baler comprising a rotary input shaft connectable by way of a baler driveline to a rotatable flywheel, the driveline comprising first and second heat-generating components and a fluid supply circuit comprising a pump for supplying cooling fluid to the first and second heat-generating components. The method comprises receiving driveline data indicative of a current and/or future status of the first and second heat-generating components of the driveline, determining a control signal for controlling an amount of cooling fluid flow provided to the first and second heat-generating components, on the basis of the driveline data, and providing the control signal to a cooling fluid supply circuit.

The method includes determining a desired distribution of a cooling fluid flow provided by the pump between the first and second heat-generating components, on the basis of the driveline data; and determining the control signal on the basis of the desired distribution of cooling flow; wherein the fluid supply circuit has a first fluid supply mode, in which at least one heat-generating component of the driveline is supplied with cooling fluid at first cooling fluid flow rate, and a second fluid supply mode, in which at least one of the heat-generating components is supplied with cooling fluid at a second cooling fluid flow rate, and wherein the first cooling fluid flow rate is higher than the second cooling fluid flow rate; and the control signal puts the fluid supply circuit in the first fluid supply mode or the second fluid supply mode. The method is characterised in that the first cooling fluid flow rate is between 4 and 10 times higher than the second cooling fluid flow rate; and in that the cooling fluid supply circuit includes two fluid flow control components that are flow reducing devices, the method including bypassing at least one of the two or more cooling fluid flow control components when the fluid supply circuit is in the first fluid supply mode whereby to supply unrestricted flow of the cooling fluid to at least one of the heat-generating components.

The agricultural work vehicle (or tractor) may include one or more control devices, such as but not limited to programmable or non-programmable processors. Similarly, the baler implement may include one or more control devices, such as but not limited to programmable or non-programmable processors. Additionally, or alternatively, the baler implement may be controlled by one or more control devices of the agricultural work vehicle. Similarly, the agricultural work vehicle may be controlled by one or more control devices of the baler.

The agricultural work vehicle and/or the baler implement may be remotely controlled, e.g. from a farm office. Accordingly, the agricultural work vehicle may include one or more communication interfaces for connection to a remote processor and/or a remote controller. Similarly, the baler may include one or more communication interfaces for connection to a remote processor and/or a remote controller.

### Brief Description of the Drawings

There now follows a description of preferred embodiments of the disclosure, by way of non-limiting example, with reference being made to the accompanying drawings in which:
Figure 1 is a schematic representation of an agricultural baling machine comprising a baler implement and a work vehicle;
Figure 2 is a cross-sectional view of a transmission, forming part of the baling machine visible in Figure 1;
Figure 3 is a schematic representation of the functionality of the transmission shown in Figure 2;
Figure 4 is a hydraulic schematic of parts of a fluid supply circuit forming part of the baling machine visible in Figure 1.
Figure 5 is a hydraulic schematic of parts of an alternative fluid supply circuit forming part of the baling machine visible in Figure 1.
Figure 6 is a schematic flow chart of the method for controlling an agricultural baler according to an embodiment of the present disclosure.

### Detailed Description of the Drawings

Referring to the drawings, an agricultural baler (baling machine) 10 is shown being towed behind an agricultural work vehicle (towing vehicle) that in the illustrated embodiment non-limitingly is an agricultural tractor 11.

The tractor 11 is a conventional tractor including a vehicle frame/body 11a, rear-mounted cab 11b, front, steerable, ground-engaging wheels 11c and rear, driven, ground-engaging wheels 11d. Tractor 11 includes at its rear end between the rear wheels 11d a power take-off 12 of a conventional design that includes a rotative coupling for a PTO shaft 13 that extends rearwardly of the tractor 11. The PTO 12 may be engaged to cause rotation of the PTO shaft 13 or disengaged, such that the shaft 13 is not powered to rotate, for example through the operation of a control lever or pushbutton.

The tractor 11 may have any of a range of engine power outputs including but not limited to 200 hp, 300 hp and 400 hp. The agricultural baler 10 is operable when towed by any such tractor 11, without a need for adjustment or modification, for the reasons explained below.

The PTO shaft 13 may be any of a variety of lengths. A relatively short PTO shaft 13 and drawbar 14 (described below) minimises the distance between the pick-up 19 (described below) of the baler 10 and the tractor 10. This provides certain advantages, although in some other respects a longer PTO shaft 13 may provide good adjustment flexibility.

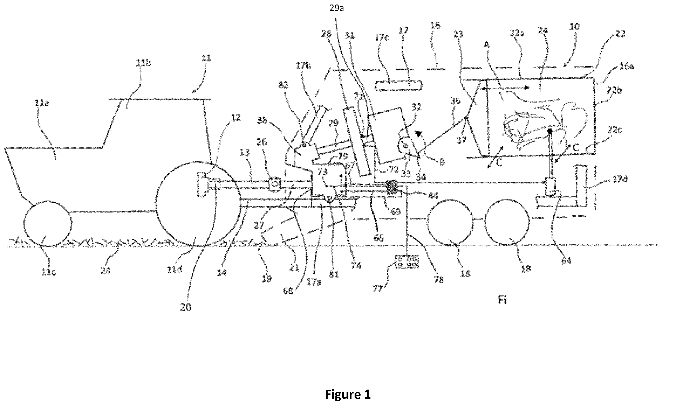

The partial driveline represented by the PTO 12 and PTO shaft 13 may in various types of tractor include a PTO clutch 20 that as described above seeks to protect the engine of the tractor 11 from damage caused e.g. when an excessive loading on the PTO shaft causes engine stalling. The PTO clutch 20 is shown schematically in Figure 1. It may readily be envisaged by the person of skill in the art and typically would be a one-way clutch of a kind that permits free movement when rotating in one direction, and transfers rotary drive via the PTO shaft 13 when rotating in the opposite direction. Other forms and locations are possible in respect of the clutch 20.

The baler 10, i.e. a baling implement, is secured to the rear of the tractor 11 by way of a drawbar 14 that typically is of an "A"-shape when viewed in plan and extends forwardly of the baler 10 below the PTO shaft 13. The drawbar 14 is pivotably secured to a conventional towing hitch at the rear of the tractor 11.

The baler 10 includes a housing or cover 16 that may take a variety of forms. The housing 16 in most baler designs includes a section 16a that is open to permit ejection of formed bales at the rear of the baler 10.

Panels defining the housing 16 further may be openable or removable in order to permit maintenance of the interior parts of the baler 10 replacement of bobbins of twine used for tying completed bales or the clearance of blockages that can arise for a variety of reasons.

The housing 16 of the baler 10 is secured to a baler frame 17 selected parts 17a, 17b, 17c, 17d of which are illustrated in Figure 1, with the complete frame 17 being omitted for ease of illustration.

The baler 10 is mobile and to this end it includes secured to the frame 17 two or more ground-engaging wheels 18.

In the embodiment illustrated, four wheels are provided, being left and right front wheels and left and right rear wheels 18. In Figure 1 the left-hand side front and rear wheels are visible.

In this regard the front or forward end of the baler 10 is the end of it that is closest to the towing tractor 11, and the terms *"rear", "left", "right", "upper", "lower"* and derivative terms are interpreted accordingly and as though an observer is looking forwardly along the baler 10.

The wheels 18 may be mounted relative to the frame 17 by way of suspension components and passive or active steering components as would be known to the person of skill in the art, or they may be mounted more simply. The wheels 18 optionally may include tyres and/or gripping elements that are omitted from Figure 1 for ease of viewing.

A pick-up 19 projects forwardly of the baler 10 and is arranged to collect cut plant matter 24 lying in a field in which the baler 10 moves as influenced by the motion of the tractor 11. The pick-up 19 passes the plant matter to a conveyor 21. The conveyor 21 conveys the plant matter inside the baler 10 where it undergoes baling.

Numerous designs of pick-up 19 and conveyor 21 are known in the baler art and fall within the scope of embodiments disclosed herein. The precise designs of the pick-up 19 and conveyor 21 are essentially immaterial to the nature and operation of the disclosure, and therefore are not described in detail.

As mentioned, the baler 10 includes an internal bale-forming chamber 22. This is an elongate, cuboidal volume defined by chamber walls of which top and bottom walls 22a and 22c are visible in Figure 1. The bale-forming chamber 22 in a typical baler design extends in a fore and aft direction in an upper part of the rear of the volume enclosed by the housing 16.

The rear 22b of the bale-forming chamber coincides with the aforementioned open housing section 16a in order to allow ejection of completed bales in a *per* se known manner.

A crop flow path exists inside the baler 10 between the conveyor 21 and the bale-forming chamber 22. The crop flow path may readily be envisaged and is omitted from the figures for clarity.

The forwardmost end of the bale-forming chamber 22 is essentially open. A plunger 23 occupies the interior cross-section of the bale-forming chamber 22 and is constrained to move longitudinally inside the chamber 22 from the open, forward end towards and away from the rear 22b of the bale-forming chamber 22 as signified by arrow A.

The PTO shaft 13 as mentioned may be powered to rotate, in virtually all tractors in a clockwise direction when viewed from behind the tractor 11. PTO shaft 13 is connected by way of at least one, and in practice at least two, universal joint 26 to the forwardmost end of a rotary input shaft 27 of the baler 10. The universal joint 26 in a well-known manner accommodates changes in the relative orientation of the tractor 11 and baler 10 that result from towing of the baler from place to place, e.g. while the baler is working or when it is travelling between fields.

The input shaft 27 is supported e.g. using journal bearings that are omitted from Figure 1 for ease of viewing and connects by way of a driveline, described in more detail below, to a rotatable flywheel 28.

The flywheel 28 is supported on a flywheel shaft 29 that also is supported using journal bearings, or a functionally similar arrangement, that further is omitted from Figure 1. The functions of the flywheel 28 are as described above, although as explained it is possible for the flywheel 28 in embodiments of the disclosure to be made considerably lighter than some prior art flywheels.

The rear end 29a of the flywheel shaft 29 is a rotary input to a drive converter 31 or similar transmission that by way of intermeshing gear components alters the axis of rotation of rotative energy in the baler 10. This drive converter 31 may be referred to as a main transmission in some examples.

The nature of the drive converter 31 thus is such that the longitudinally extending (with reference to the elongate length of the baler 10 as illustrated) axis of rotation of the flywheel shaft 29 becomes rotation about a transversely extending axis of a crankshaft 32.

The crankshaft 32 is connected to a pair of crank members (only the right one is shown as 33) that protrude from the drive converter 31 in a manner presenting free ends. The pair of crank members and corresponding conrods (only the right one shown as 36) connect the crankshaft 32 of the drive converter 31 with the forward side of the plunger 23. A first, right side crank member 33 has a first end connected to the crankshaft 32 of the drive converter 31. A second end of the first, right side crank member 33 is connected to a first end 34 of a first, right side conrod 36. The first, right side conrod 36 has a second end 37 connected to the plunger 23. A second, left side crank member (not shown) has a first end connected to the crankshaft 32 of the drive converter 31. A second end of the second, left side crank member is connected to a first end of a second, left side conrod (not shown). The second, left side conrod has a second end (not shown) connected to the plunger 23.

As is apparent from Figure 1, therefore, rotation of crankshaft 32 causes rotation of crank member 33, as signified by arrow B, that gives rise to the rectilinear, reciprocal motion of plunger 23 indicated by arrow A.

In this regard it is somewhat arbitrary whether crank 33 rotates clockwise or anticlockwise, since reciprocal motion of the plunger 23 may in an appropriately designed set of driveline elements be achieved regardless of the direction of rotation of the crank 33. The actual rotational direction of the crank 33 would be a consequence of the internal design of the drive converter 31. Such aspects are not relevant to an understanding of the disclosure, and therefore are not provided in detail herein.

Charges of plant matter 24 conveyed inside the baler 10 from the conveyor 21 repeatedly are at intervals fed by internal components of the baler 10, that are omitted from Figure 1 for clarity, into the interior of the bale-forming chamber 22 for compaction by reason of the reciprocal, rectilinear motion (arrow A) of the plunger 23. The feeding of each charge of plant matter 24 is timed to coincide with positioning of the plunger 23 at its retracted, i.e. forwardmost position, with the result that the plant matter 24 becomes compressed and compacted by the movement of the plunger 23 into bale form after it has been fed in to the bale-forming chamber 22.

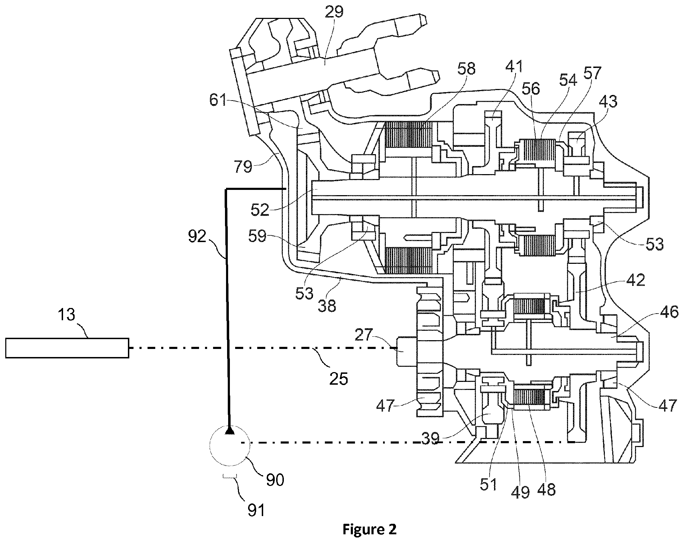

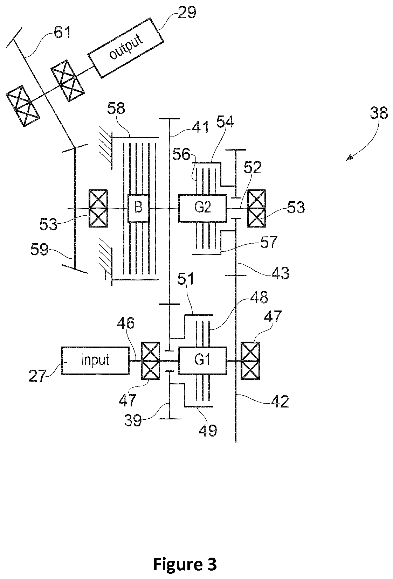

The driveline defined between the input shaft 27 and the flywheel shaft 29 includes a transmission 38 that is described below in relation to Figures 2 and 3.

In Figures 2 and 3, the transmission 38 connects the rotary input shaft 27 to the flywheel shaft 29 at first and second selectable transmission ratios defined by driveline components within the transmission 38.

A first transmission ratio G1 is defined by mutually meshing, rotary, toothed gears 39, 41 that each are supported for rotation within the transmission 38. The first transmission ratio G1 is a relatively great reduction ratio transmission providing a high degree of mechanical advantage.

A second transmission ratio G2 is defined by mutually meshing, rotary, toothed gears 42, 43 that each are supported for rotation within the transmission 38 adjacent the gears 39, 41 in a manner defining a parallel driveline to that representing the first transmission ratio G1. The second transmission ratio G2 is a relatively close reduction ratio transmission providing a higher speed of output shaft rotation than the first transmission ratio G1.

The agricultural baling system includes a control unit 44, non-limitingly illustrated schematically in Figure 1, in the form of a programmable microprocessor. In the embodiment of Figure 1, the control unit is connected to the baler 10, which includes a source of electrical power, for the control unit 44, that in preferred embodiments may take the form of a rotary generator that is driven directly or indirectly by the PTO shaft, although other sources of electrical power including batteries and other storage devices, or other types of generator, are possible. Combinations of electrical power sources furthermore are possible.

As indicated, the control unit may take a variety of forms and need not be a control unit as illustrated, or a single component. The control unit may also be arranged on the tractor 11 or a remote location, such as a farm control centre, and communicate remotely with corresponding components of the baler.

The baler 10 optionally may include one or more input devices 77, represented schematically and non-limitingly in Figure 1, by means of which information on the energy transmitted via the power take-off shaft 13 may be input to the control unit 44.

In Figure 1 an input device 77 is shown in the form of a keypad connected to the control unit 44 via an electrical cable 78, and using which e.g. the rated power output of the tractor 11 can be input to the baler 10. The control unit can select a set of decision parameters (such as the preferred speed of plunger 23 at which to transition from the first transmission ratio G1 to the second transmission ratio G2) that are optimised for the input power level.

The input device 77 may take a variety of other forms. These include but are not limited to a code reader that can read a code printed or affixed on part of the tractor 11, e.g. adjacent the PTO; a near-field communications (NFC) device that establishes a communications link with a control unit forming part of the tractor 11 in order to download power output information; or a cable connection between the control unit 44 and a counterpart control unit forming part of the tractor 11.

The transmission 38 in preferred embodiments includes a rigid housing 79 that may be formed e.g. by casting from a metal alloy, especially a high stiffness, lightweight alloy.

As explained the baler 10 includes a number of frame elements 17. The housing 79 may be positioned to interconnect two or more such frame members (e.g. frame members 17a and 17b as non-limitingly illustrated in Figure 1) in a manner enhancing the stiffness of the frame 17 of the baler 10.

In the illustrated embodiment such interconnection is achieved by way of perforated lugs 81, 82 by means of which the housing 79 is bolted to interconnect two frame members, but as will be apparent to the person of skill in the art such interconnection may be achieved in a variety of alternative ways.

The layout of the components of the transmission 38 inside the housing 79 is such that the driveline components 39, 41 defining the first transmission ratio G1 occupy a first vertically extending distance in the housing 79; and the driveline components 42, 43 defining the second transmission ratio G2 occupy a second vertically extending distance in the gearbox housing, the upper limit of the second vertically extending distance terminating below the upper limit of the first vertically extending distance.

This means that the transmission 38 is compact in the longitudinal dimension of the baler 10, and also that the output of the transmission 38 is connected to the flywheel shaft 29 at a relatively high point in the baler 10. This provides several advantages in terms of transferring drive input via the input shaft 27 to the location of the plunger 23, which as mentioned is located relatively high inside the baler 10.

The control unit 44 is capable (typically but not necessarily as a result of software and/or firmware programming) of selectively engaging the first or the second transmission ratio G1, G2. The arrangement of the components and/or the programming of the control unit 44 prevents the first and second transmission ratios from being selected simultaneously.

As best illustrated in Figures 2 and 3, the input shaft 27 rigidly connects to an input gear shaft 46 that is supported (non-limitingly in the embodiment illustrated by way of journal bearings 47 at either end) for rotational movement inside the transmission 38. The input gear shaft 46 is locked to the gear 42 such that the gear 42 always rotates with the input gear shaft 46.

The input gear shaft 46 is also locked to an input side 48 of a first transmission clutch 49 forming part of the driveline. As a result, the input side 48 of the first transmission clutch 49 also rotates with the input gear shaft 46.

The first transmission clutch 49 is e.g. electrically or electro-hydraulically activated in the described embodiment, and is selectively engageable under command from the control unit 44. When engaged the output side 51 of the first transmission clutch 49 is locked to the input side 48 and rotates therewith.

The output side 51 of first transmission clutch 49 is locked to the gear 39 of the first transmission ratio G1 such that the gear 39 rotates with the output side 51.

In the illustrated embodiment, the first transmission clutch 49 lies on the first gear shaft 46 intermediate the gears 39 and 42, but as will occur to the person of skill in the art this need not be the case, and other clutch and gear position combinations are possible.

As explained, the gears 42 and 43 are mutually meshed, with the gear 43 supported on the rotational intermediate gear shaft 52. The intermediate gear shaft 52 is supported (in the non-limiting example shown by way of journal bearings 53 at either end) for rotation relative to the remainder of the transmission 38.

By reason of locking of the input gear shaft 46 to the gear 42, the gear 43 rotates whenever the input gear shaft 46 rotates, at a speed, relative to the speed of the input gear shaft 46, determined by the gear tooth ratio between the gears 42 and 43. However, the gear 43 merely idles unless a second transmission clutch 54, which may be of a similar design to the first transmission clutch 49 and hence operable under command of the control unit 44, is engaged.

In this respect, the intermediate gear shaft 52 is locked to an input side 56 of a second transmission clutch 54; and an output side 57 is locked to the gear 43. As a result, when the clutch is engaged, rotation of gear 43 is transmitted via the intermediate gear shaft 52.

The gear 39 is meshed with the gear 41 as explained. The gear 41 is locked to the intermediate gear shaft 52. Clearly, therefore, to avoid locking up of the transmission it is essential that only one of the transmission clutches 49, 54 is engaged at a time. When the first transmission clutch 49 is engaged and the second transmission clutch 54 is disengaged, drive from the input shaft 27 is transmitted via the meshed gears 39 and 41 to drive intermediate gear shaft 52 in accordance with the first, reduction transmission ratio "G1" determined by the numbers of teeth of gears 39 and 41. At this time, the gears 42 and 43 rotate in an idling manner.

When the first transmission clutch 49 is disengaged and the second transmission clutch 54 is engaged, the drive of the input shaft 27 is transmitted via the gears 42 and 43 to the drive intermediate gear shaft 52 in accordance with the second transmission ratio "G2" determined by the numbers of teeth of the gears 42 and 43.

As explained herein, the first transmission ratio G1 is a reduction ratio, in which the speed ratio exceeds 1. This provides a beneficial mechanical advantage when moving the flywheel 28 from rest. The second transmission ratio G2, is an acceleration ratio, the speed ratio of which is a value less than 1. This causes rotation of the flywheel shaft 29 to be at a higher speed than that of the PTO shaft 13. As will be described in more detail below, the first and the second transmission ratios G1, G2 will have opposite speed ratios, when the baler is operated in its second state.

It is possible for both the clutches 49, 52 to be disengaged simultaneously. In that case gears 42 and 43 would rotate, but no drive would be transmitted to intermediate gear shaft 52.

The intermediate gear shaft 52 includes, mounted thereon, a brake 58 that may be employed when both the transmission clutches 49, 52 are disengaged to slow the flywheel shaft 29, e.g. during the second state of the baler. The flywheel shaft 29 receives the rotary drive of intermediate gear shaft 52, when one of the transmission clutches 49, 54 is closed, via meshed output gears 59, 61.

The numbers of teeth of the gears 39, 41, 42, 43, 59 and 61 may be varied extensively in all the gears of the transmission 38 depending on the precise design of the transmission 38. The overall numbers of drive-transferring components in the transmission may be varied. Also as explained the driveline elements defining the transmission ratios need not be meshing, toothed gears and instead may adopt a range of other forms, including but not limited to the examples given above.

The transmission clutches 49 and 54 may be for example electrically (e.g. solenoid) operated, electro-mechanically operated or electro-hydraulically operated, under the control of the control unit 44. Preferably, but not essentially, the transmission clutches 49, 54 are spooled wet clutches the nature of which is familiar to the person of skill in the art and therefore does not require describing in detail herein. Wet clutches generally are highly suitable for computer or other electronic control, leading to rapid clutch engagement and disengagement.

One form of control of the transmission clutches 49, 54 is by electrical control signals transmitted from the control unit 44 to the first and second transmission clutches 49, 54. One form of control of the transmission clutches 49, 54 is illustrated schematically by electrical control signal line 66 (Figure 1) that transmits commands from the control unit 44 to first transmission clutch 49; and control line 67 that transmits commands from the control unit 44 to second transmission clutch 54.

Two-way communication between the transmission clutches 49, 54 and the control unit 44 optionally is possible. Using two-way control, the transmission clutches 49, 54 can signify e.g. their operational (i.e. engaged or disengaged) status, information on the condition of wear parts such as friction plates, levels of clutch fluid in the event of the clutches being wet clutches as is preferred and similar operational variables. The control unit 44 can generate commands and/or warning signals in dependence on the signals received from the transmission clutches 49, 54.

The control unit 44 may further be connected to a rotational speed sensor 68 and/or an oil temperature sensor 73 via electric signal line 74.

The control unit 44 is capable of selectively disengaging the rotary drive between the input shaft 27 and the shaft 29 supporting the flywheel 28. This possibility is explained further below in connection with operational sequences made possible by the apparatus of the present disclosure. The control unit 44 may also be capable of selectively activating the brake 58 of the transmission 38. Activation of the brake 58 will actively slow the rotational speed of the flywheel shaft 29 and thus the speed of the flywheel 28 connected to the flywheel shaft 28.

In one embodiment, the first and second clutches 49, 54 and the brake 58 are all hydraulically actuated devices. To this end, the baler 10 comprises a pump (not shown) for providing hydraulic fluid that may be used to control activation of the first and second clutches 49, 54 as well as the brake 58. The baler 10 also includes a cooling pump 90, schematically illustrated in Figure 2, for providing cooling fluid to heat-generating parts of the baler driveline. It should be appreciated that the hydraulic schematic of Figure 2 is heavily simplified, e.g. by removing the return lines for the hydraulic fluid flow provided by the pump 90.

The cooling pump 90 is arranged on the baler 10 such that it is driveable by means of the PTO shaft 13. To this end, the cooling pump 90 may either be directly or indirectly connected to the PTO shaft 13. In one embodiment, the hydraulic pump 90 is connected to and driven by the input shaft 27. The input shaft 27 is, in turn, connected to the PTO shaft 13 via driveline components 25 that are only schematically illustrated in Figure 2.

In the example of Figure 2, the cooling pump 90 may be directly connected to the gear 42 that is permanently connected to the input shaft 27. A drive shaft of the pump 90 may be connected to one or more driven gears (not shown), which are in meshing contact with and driven by the sprockets of the gear 42. Of course, other pumps, such as shift pumps etc., could also be connected to the input shaft. In some embodiments, a shift pump is connected to the same drive shaft as the cooling pump 90 shown in Figure 2.

The cooling pump 90 is arranged to provide cooling fluid flow from a reservoir 91 to the inside of the transmission housing 79, and particularly towards heat-generating components of the transmission 38, such as the first and second clutches 49, 54 and the brake 58, as will be described in more detail below.

Heat-generating components referred to in this specification may generally be any component within the baler driveline that will generate amounts of heat during normal operation that require the provision of cooling fluid flow to reduce wear and other heat damage. The following description will refer to the first and second clutches 49, 54 as well as the brake 58 as examples of heat-generating components within the driveline. However, it will be understood that the baler system of the present disclosure is not restricted to such specific examples of heat-generating components.

The control unit 44 may be connected to a variety of control valves for selectively providing the coolant flow of the cooling pump 90 for cooling the heat-generating component of the baler 10.

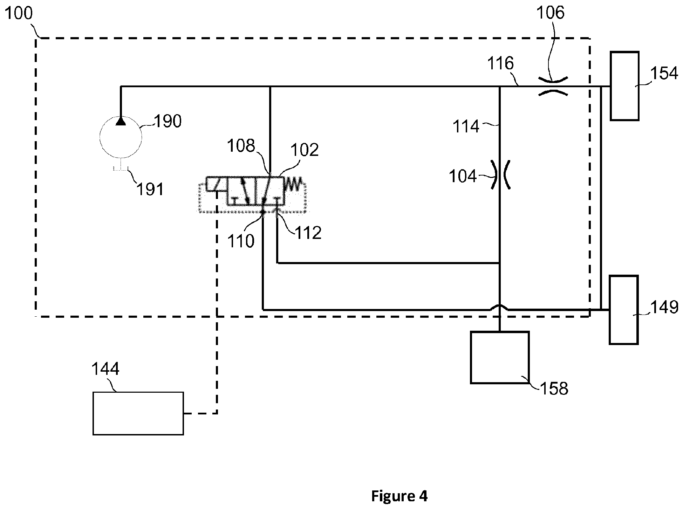

Turning to Figure 4, there is shown a first embodiment of a hydraulic fluid supply circuit 100 for supplying cooling fluid flow to heat-generating components of the agricultural baler. The cooling fluid supply circuit 100 may be arranged on the agricultural baler 10. In alternative embodiments, the cooling fluid supply circuit may be arranged on the corresponding work vehicle, such as the tractor 11 shown in Figure 1.

The cooling fluid supply circuit 100 comprises a cooling pump 190 that includes a first port connected to a cooling fluid reservoir 191. An outlet port of the cooling pump 190 is connected to a directional control valve 102 as well as first and second flow control components 104, 106.

The directional control valve 102 may be a three/two-way valve. An inlet port 108 of the directional control valve 102 is connected to the outlet port of the cooling pump 190. The directional control valve 102 includes a first outlet port 110 and a second outlet port 112. In a first position of the directional control valve 102, the inlet port 108 is connected to the first outlet port 110. In a second position of the directional control valve 102, the inlet port 108 and the second outlet port 112 are connected. The first outlet port 110 is connected to first and second heat-generating components 149, 154, such as the first and second clutches 49, 54 discussed with reference to Figures 2 and 3. The second outlet port 112 of directional control valve 102 is connected to a third heat-generating component 158, such as the brake 58 discussed with reference to Figures 2 and 3.

The first and second flow control components 104, 106, in their simplest form, may be throttles for reducing the amount of flow provided to the heat-generating components 149, 154, 158 by the cooling pump 190. Alternatively, the first and second flow control components may be any other flow reducing devices, such as pressure-compensated flow control valves, etc.

The first flow control component 104 may reduce hydraulic fluid flow provided to the third heat-generating component 158 via a fluid line 114. The second fluid flow control component 106 may reduce the amount of fluid flow provided by the cooling pump 190 to the first and second heat-generating components 149, 154 via a fluid line 116.

Fluid flow provided to the first and second heat-generating components 149, 154 via the first outlet port 110 of directional control valve 102 is generally unrestricted, in this example. The fluid flow provided to the third heat-generating component 158 via the second outlet port 112 of the directional control valve 102 is also substantially unrestricted, in this example.

The cooling fluid supply circuit 100 shown in Figure 4 generally comprises two states. In a first state, when the directional control valve 102 is in its first position (shown in Figure 4), a first, higher cooling fluid flow rate is provided to the first and second heat-generating components 149, 154, via the first outlet port 110 of the directional control valve 102. This is because the fluid flow bypasses the second flow control component 106 in the first state. The same amount of cooling fluid flow will be provided to both the first and second heat-generating components 149, 154. No cooling fluid flow will be provided to the third heat-generating component 158 via the directional control valve 102, when the fluid supply circuit 100 is in its first fluid supply mode. However, a reduced amount of fluid flow will still be provided to the third heat-generating component 158, when the fluid supply circuit is in its first fluid supply mode. In detail, hydraulic fluid flow provided by the pump 190 is provided to the third heat-generating component 158 via the fluid line 114 that connects the first flow control component 104 to the third heat-generating component 158, in the first state. Cooling fluid flow provided to the third heat-generating component 158 via the first flow control component 104 is supplied at a second cooling fluid flow rate. The second cooling fluid flow rate is lower than the first cooling fluid flow rate that is supplied to the first and second heat-generating components 149, 154, in the first fluid supply mode of the fluid supply circuit 100. In one example, the first flow control component 104 may be sized such that the second cooling flow rate is sufficient for lubrication of the third heat-generating component 158. In one embodiment, the first cooling fluid flow rate is between four to ten times higher than the second, reduced cooling fluid flow rate. The first fluid flow control component 104 may be sized accordingly.

In a second fluid supply mode of the cooling fluid supply circuit 100, the directional control valve 102 shown in Figure 4 is transferred to its second position (i.e. shifted to the right in Figure 4), such that the inlet port 108 and the second outlet port 112 of the directional control valve 102 are connected. Therefore, in this second fluid supply mode of the cooling fluid supply circuit 100, substantially unrestricted fluid flow is provided from the pump 190 to the third heat-generating component 158 via the directional control valve 102, whereas restricted fluid flow is provided to the first and second heat-generating components 149, 154 via the second flow control component 106. This is because the fluid flow bypasses the first flow control component 104 in the second state. Accordingly, the third heat-generating component 158 is provided with a high, first cooling fluid flow rate, whereas the second and third heat-generating components 154, 149 are provided with a lower, second cooling flow rate via the second fluid flow control component 106. The second fluid flow control component 106 may be sized such that the first fluid flow rate provided to the third heat-generating component 158, in the second fluid supply mode, is four to ten times higher than the second fluid flow rate provided to the first and second heat-generating components 149, 154. In one embodiment, the second flow control component 106 is sized such that the second fluid flow rate supplied to first and second heat-generating components 149, 154 is sufficient for lubrication of the first and second heat-generating components 149, 154.

As will be described in more detail below, a control unit 144 may provide a suitable control signal to the directional control valve 102 to initiate a transfer of the fluid supply circuit between its first and second fluid supply modes.

In view of the above, it will be appreciated that the cooling fluid supply circuit 100 shown in Figure 4 generally comprises two fluid supply modes in which the heat-generating components are supplied with varying/different amounts of cooling fluid flow. It will be appreciated, however, that the cooling fluid supply circuit 100 may easily be modified to incorporate other fluid supply mode. For instance, in one embodiment, the directional control valve 102 may have a third position in which the connection between the inlet port 108 and both outlet ports 110, 112 is blocked. It follows that, in this third position, the fluid supply circuit 100 is in a third fluid supply mode in which all three heat-generating components are provided with a reduced flow rate. In the example of Figure 4 in which the two flow control components 104, 106 are sized the same, the three heat-generating components would provide with substantially the same amount of cooling fluid flow if the outlet ports 110, 112 were blocked off.

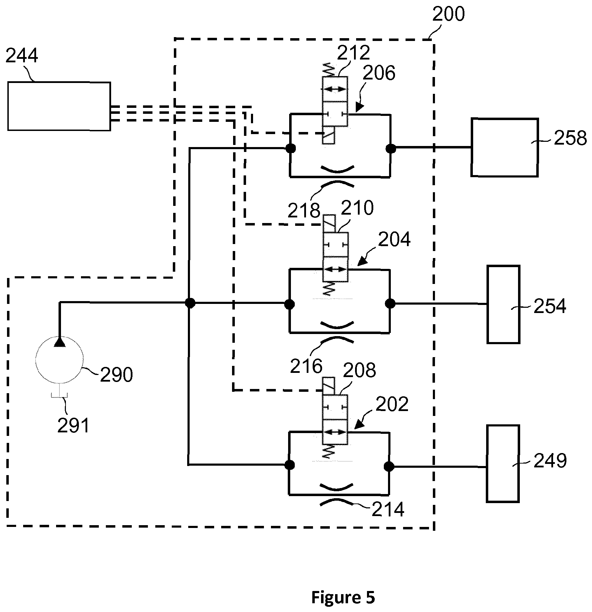

With reference to Figure 5, there is shown a second example of a fluid supply circuit 200 for providing the heat-generating components 249, 254, 258 with varying cooling fluid flow rates. Similar to the fluid supply circuit 100 shown in Figure 4, the fluid supply circuit 200 shown in Figure 5 includes a cooling pump 290 with an inlet port connected to a cooling fluid reservoir 291. An outlet port of the cooling pump 290 is selectively connectable to one or more of the heat-generating components 249, 254, 258 of the agricultural baler. To this end, the outlet port of the cooling pump 290 is connected to the first heat-generating component 249 via a first flow control assembly 202. The outlet port of the cooling pump 290 is connected to the second heat-generating component 254 via a second flow control assembly 204. The outlet port of the cooling pump 290 is connected to the third heat-generating component 258 via a third flow control assembly 206.

Each of the flow control assemblies 202, 204, 206 of the embodiment of Figure 5 includes a shut-off valve 208, 210, 212 that is arranged in parallel with a corresponding flow control component 214, 216, 218. In the schematic illustration of Figure 5, the flow control components 214, 216, 218 are shown as throttles, which may provide a predetermined resistance to the hydraulic cooling flow provided by the cooling pump 290. Of course, the flow control components 214, 216, 218 may be any other suitable flow reducing device, such as adjustable flow control valves.

The second cooling fluid supply circuit 200 has first and second fluid supply modes, which are generally identical with the first and second fluid supply modes of the fluid supply circuit 100 shown in Figure 4. In the first fluid supply mode of the fluid supply circuit 200, the first and second shut-off valves 208, 210 may be in an open state, whereas the third shut-off valve 212 may be in a closed state. In this first fluid supply mode, the cooling fluid flow provided by the cooling pump 290 is provided to the first and second heat-generating components 249, 254 in a substantially unrestricted manner. This is because cooling fluid flow provided by the cooling pump 290 to the first and second flow control assemblies 202, 204 may bypass the first and second flow control components 214, 216 via the first and second shut-off valves 208, 210. By contrast, fluid flow provided by the cooling pump 290 directed to the third heat-generating component 258 cannot bypass the third flow control component 218, since the third shut-off valve 212 is closed. Accordingly, a restricted fluid flow will be provided to the third heat-generating component 258 via the third flow control component 218. The first fluid supply mode of the fluid supply circuit 200 shown in Figure 5, therefore, facilitates provision of cooling fluid flow at a first, high fluid flow rate to the first and second heat-generating components 249, 254, and at a second, reduced cooling fluid flow rate to the third heat-generating component 258, similar to the embodiment of Figure 4.

A second fluid supply mode of the fluid supply circuit shown in Figure 5 may be achieved by closing the first and second shut-off valves 208, 210, and, at the same time, opening the third shut-off valve 212. It will be understood that this will result in generally unrestricted cooling fluid flow being provided to the third heat-generating component 258 via the third shut-off valve 212, whereas the fluid flow provided to the first and second heat-generating components 249, 254 is restricted by the first and second flow control components 214, 216. It follows that, in the second fluid supply mode, the third heat-generating component 258 is provided with the first, higher cooling fluid flow rate, whereas the first and second heat-generating components 249, 255 are provided with the second, lower cooling fluid flow rate.

It will be appreciated that the fluid supply circuit 200 of Figure 5 enables various other fluid supply modes depending on the state of the shut-off valves 208, 210, 212. In one example, the cooling fluid flow provided by the cooling pump 290 may be restricted for all of the heat-generating components 249, 254, 258. In such a third fluid supply mode, all of the shut-off valves 208, 210, 212 may be closed at the same time, such that the cooling fluid flow provided by the cooling pump 290 is reduced by the flow control components 214, 216, 218 of the respective flow control assemblies 202, 204, 206.

Moreover, in a fourth fluid supply mode, all of the heat-generating components 249, 254, 258 may be provided with the same amount of unrestricted fluid flow, simply by opening all of the shut-off valves 208, 210, 212 at the same time.

The position of the shut-off valves, and therefore the selected fluid supply mode of the cooling fluid supply circuit 200, may be set by a control unit 244, which, in the example of Figure 5, is connected to solenoid actuators of the shut-off valves 208, 210, 212. The control unit may provide a suitable control signal to the shut-off valves 208, 210, 212 to select the desired fluid supply mode of the fluid supply circuit 200, and thus achieve certain cooling fluid supply rates provided to the first, second and third heat-generating components 249, 254, 258. The way in which the control unit 244 switches the fluid supply circuit 200 between its various supply modes is described in more detail below.

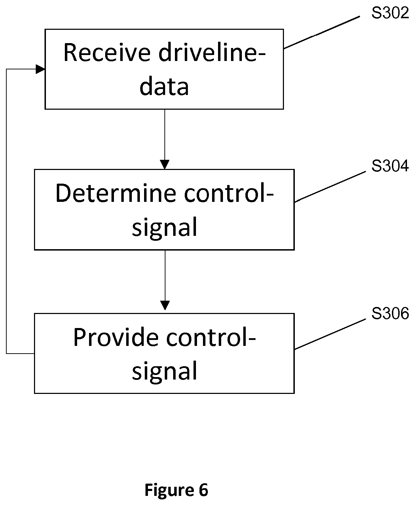

Turning to Figure 6 there is shown a schematic flow chart of an embodiment of the method of the present disclosure. The method is for controlling an agricultural baler that comprises a rotary input shaft (such as the input shaft 27 of Figure 1) connectable by way of a baler driveline to a rotatable flywheel, such as flywheel 28, the driveline comprising at least one heat-generating component, wherein the baler also comprises a pump for supplying cooling fluid to the at least one heat-generating component. The method is a computer-implemented method that can be performed by the control unit described above.

As mentioned before, the at least one heat-generating component may be any component within the baler driveline that will generate significant amounts of heat during normal operation, i.e. if no failure occurs. In other words, the heat-generating component or components are parts of the driveline that are provided with cooling fluid flow to reduce wear of such components and to avoid unexpected heat damage.

In a first step S302, the method comprises receiving driveline data. The driveline data is indicative of a current and/or future status of the at least one heat-generating component of the driveline. In the following, the method of controlling the agricultural baler shall be explained, by way of example only, with reference to the embodiment shown in Figures 2 and 3. In this embodiment, the three heat-generating components, i.e. the first clutch 49, the second clutch 54 and the brake 58 are all part of the driveline. Of course, the present disclosure is not restricted to this number of heat-generating components and their position within the transmission of the agricultural baler.

Referring to the example of Figures 2 and 3, the driveline data may be indicative of an engagement status of the first and second clutch 49, 54 and/or of the current or future activation status of the brake 58. Sensors providing live status-data, such as position sensors provided at the clutches 49, 54 and/or the brake 58 may be used to provide current status data of the heat-generating components. Alternatively, or additionally, the status of the heat-generating components may be predicted or assumed during certain times of the agricultural baler operation. Examples of the use of future status of the heat-generating components will be explained in more detail below.

In a step S304, a control signal is determined. The control signal is for controlling an amount of cooling fluid flow provided to the at least one heat-generating component on the basis of the driveline data. As will be explained in more detail below, the cooling fluid flow provided by a corresponding cooling pump may be divided between the heat-generating components, e.g. the clutches 49, 54 and the brake 58, depending on their current or future status derivable from the driveline data.

The control signal determined in step S304 may be provided to a corresponding fluid supply circuit, such as the fluid supply circuits 100, 200 shown in Figures 4 and 5 in a third step S306.

In the following, a non-exhaustive list of exemplary cooling flow control scenarios is provided.

In a first scenario, during start-up of the agricultural baler, the first clutch 49 is gradually engaged, so as to utilise the first gear ratio G1 to set the flywheel 28 in motion. During engagement of the first clutch 49, the friction surfaces of the first clutch 49 are slowly brought into contact. During engagement of the first clutch 49 slip between the friction surfaces of the first clutch 49 occurs until the first clutch 49 is fully engaged, which is when the friction surfaces no longer move relative to each other. The clutch slip between the friction surfaces of the first clutch 49 during engagement generates significant amounts of heat that will need to be absorbed by the cooling fluid provided to the first clutch 49. In this first scenario, the second clutch 54 and the brake 58 are not engaged/activated, such that only small amounts of heat are produced by those components.

Exemplary driveline data relating to this first scenario may include input power data such as a PTO speed provided to the input shaft of the baler. The control-unit can use such input power data determine a current or future engagement of the first clutch 49 during the start-up procedure and then determine the control signal for controlling a fluid supply circuit accordingly.

Other driveline data may comprise transmission-control signals, such as a request supplied to the clutch control circuit for engaging one of the clutches or the brake. The control unit can process such transmission-control signals in order to determine the control signal for a fluid supply circuit. In one embodiment, the control unit may send a control signal to the cooling fluid supply circuit to increase an amount of cooling fluid flow provided to the first clutch at the same time as requesting engagement of the first clutch. In another embodiment, the control unit may send a control signal to the cooling fluid supply circuit to increase an amount of cooling fluid flow provided to the second clutch at the same time as requesting engagement of the second clutch. In yet another example, the control unit may send a control signal to the cooling fluid supply circuit to increase an amount of cooling fluid flow provided to the brake at the same time as requesting activation of the brake.

Moreover, driveline data may include engagement data received from a position sensor provided on the clutches 49, 54 and/or the brake 58 to determine whether the clutches 49, 54 and/or the brake 58 are engaged/active. The position sensor may be an optical sensor that provides binary engagement data to the control unit. The control unit may be configured to look-up or calculate a suitable control signal on the basis of the engagement data. The engagement data may also be provided by a pressure sensor for monitoring an activation pressure of the clutches 49, 54 and/or the brake 58. The clutches and the brake may be hydraulically actuated. It follows that the engagement data provided by the pressure sensor may be activation-pressure-data that can be used by the control unit to determine a suitable control signal for the fluid supply circuit to provide increased cooling fluid flow to the components that are being activated. The control unit may compare the values of the activation pressure-data with activation-pressure-thresholds set for each of the different heat-generating components. The control unit may determine a control signal for increasing the amount of cooling fluid flow provided to components that exhibit activation-pressure values that exceed the corresponding activation-pressure-threshold. If the control unit determines, on the basis of the driveline data, that the first clutch 49 is or will be engaged, while the second clutch 54 and the brake 58 remain inactive, a control signal may be determined, that will cause a higher cooling flow rate to be provided to the first clutch 49. Referring to the examples of Figures 4 and 5, the control unit may determine a control signal that will set the fluid supply circuits 100, 200 shown in Figures 4 and 5 into their first fluid supply mode. In a first fluid supply mode, a first, higher cooling fluid flow rate is provided to the first and second clutches 49, 54, whereas a second, lower fluid supply rate is provided to the brake 58. As mentioned above, the second, lower fluid supply rate may be determined to be suitable for lubrication purposes. This fluid supply mode may be maintained by the control unit until a predetermined period of time has elapsed after the first clutch 49 is fully engaged.

In a second scenario, the first clutch 49 is disengaged and the second clutch 54 is engaged to select the second transmission ratio G2 and thus further increase the speed of the flywheel shaft 29. At this point, the friction surfaces of the brake 58 and the first clutch 49 are not in contact. However, the friction surfaces of the second clutch 54 are then gradually brought into contact with each other, thereby resulting in temporary clutch slip until the second clutch 54 is fully engaged. The clutch slip experienced during engagement of the second clutch 54 results in significant heat generation within the second clutch, such that increased cooling fluid flow is required to dissipate the heat generated.

In the examples of Figures 4 and 5, the cooling fluid supply circuits do not need to be changed in order to supply the second clutch 54 with an increased cooling fluid flow rate in this second scenario. This is because, in the first fluid supply mode of the fluid supply circuits 100, 200 shown in Figures 4 and 5, both the first and second clutches 49, 54 are provided with substantially the same cooling fluid flow rate. It follows that the corresponding fluid supply circuits 100, 200 may be maintained in their first fluid supply mode during engagement of the first and second clutches 49, 54 as both clutches 49, 54 will be provided with an increased first cooling fluid flow rate in the first fluid supply mode. Of course, in other embodiments, the control unit may be able to only provide the heat-generating component that is currently in use with higher fluid flow rates. Referring to the example Figure 5, this may be achieved for the second clutch 54 by closing the first and third shut-off valve 208, 212 while opening the second shut-off valve 210.

In a third scenario, such as when a baler failure occurs, it may be desired to stop the operation of the baler as quickly as possible. In such a scenario, the first and second clutches 49 and 54 may be disengaged immediately and the brake 58 activated. When the brake 58 is activated to slow down the flywheel 28 of the baler 10, very large amounts of heat are generated between the brake pads of the brake 58. In the example of the brake 58 shown in Figures 2 and 3, a total heat energy of 800 kJ may be generated within 8 seconds of braking.

It follows from the above that the third scenario requires a large amount of cooling fluid flow provided to the brake 58 to dissipate the heat generated during braking. The control unit may thus determine a control signal for changing the fluid supply circuits 100, 200 of the examples shown in Figures 4 and 5 into their second fluid supply mode. As explained above, in the second fluid supply mode, a high, first cooling fluid flow rate is provided to the brake 58, whereas the clutches 49 and 54 are provided with a low, second fluid flow rate. This is because, in the third scenario, little heat is generated between the friction surfaces of the first and second clutches 49, 54, whereas very large amounts of heat are generated within the brake pads of the brake 58. As mentioned above, the second, lower fluid supply rate may be determined to be suitable for lubrication purposes.

Driveline data indicative of a current or future braking event may include input power data related to a status of the tractor engine. In particular, if the tractor engine is turned off, an imminent activation of the brake 58 may be requested, such that the control unit may provide a control signal to the fluid supply circuit for providing the brake 58 with a high cooling fluid flow rate. Other driveline data that is indicative of this third scenario may include safety stop data representative of an emergency stop that is required due to a baler failure. In one example, the control unit may receive safety stop data indicating that the plunger of the baler experiences unusually high loads, such that an emergency shut-down is required. The control unit may then provide a signal to activate the brake 58 and, at the same time, determine a control signal for providing an increased amount of cooling fluid flow to the brake 58. Of course, the driveline data representative of this third scenario may be any other data that is indicative of a current or future braking event.

In a fourth scenario, none of the heat-generating components of the driveline are engaged/active. In the example of Figures 2 and 3, this means that the clutches 49, 54 are not engaged and the brake 58 is not activated. In this fourth scenario, it may be advantageous to provide all of the heat-generating components with reduced cooling fluid flow to avoid unnecessary temperature increase within the cooling fluid due to relative movements between the friction surfaces of the clutches 49, 54 and the brake 58. In more detail, if the clutches 49, 54 and the brake 58 are inactive, their corresponding friction surfaces are not in contact and will rotate relative to each other. This relative rotation does not cause significant heat generation within the heat-generating components, such that a low cooling fluid flow rate is sufficient to dissipate such heat. However, the more cooling fluid that is provided between the friction surfaces of the clutches 49, 54 and the brake 58, the more resistance is provided to the relative movement of the friction surfaces. In other words, the more cooling fluid that is provided to the unused clutches 49, 54 and/or the brake 58, the more heat is generated that will be absorbed by the cooling fluid. It follows that providing large amounts of cooling fluid to inactive heat-generating components will unnecessarily increase the temperature of the cooling fluid. Accordingly, in this fourth scenario, the control unit may transfer the cooling fluid supply circuit 200 of Figure 5 into its third fluid supply mode, in which all of the heat-generating components are provided with a reduced cooling fluid flow.

It should be understood that the method of the present disclosure is concerned with the provision of suitable amounts of cooling fluid to certain heat-generating components at various stages of the baler system operation. In other words, the present disclosure relates to a baler system and method that provides an amount of cooling fluid flow that is dependent on demand, rather than supplying each of the heat-generating components with high cooling fluid flow rates at all times during the baler system operation. It will be appreciated that the actual amount of fluid flow provided to the various heat-generating components may vary significantly between different heat-generating components and at different stages of the baler operation. Although not specifically illustrated in any of the examples described above, other ways of providing varying amounts of cooling fluid flow to the heat-generating components during the operation of the baler may comprise the use of a plurality of cooling pumps. One or more of said pumps may be powered only at specific times (e.g. when high cooling fluid flow is required) to modulate the amount of cooling fluid flow provided to the heat-generating component. Other exemplary fluid supply circuits may include one or more variable displacement pumps that may be used to modulate the amount of cooling fluid supplied on the basis of the demand at various stages of the baler operation.

Supplying cooling fluid on demand as described above enables the use of smaller cooling pumps. This is because it is not necessary to provide all of the heat-generating components with high fluid flow at all times. Rather, each of the heat-generating components is supplied with relatively low lubrication flow for as long as they do not generate significant amounts of heat. In the case of clutches, there may only be a need for high fluid flow during engagement of the clutch, i.e. when clutch slip occurs. In brakes, high fluid flow may only be required when the brake is active. As mentioned before, supplying inactive heat-generating components with low fluid flow (e.g. lubricating flow) may also avoid inadvertent heat generation in the cooling/lubrication fluid.

Preferences and options for a given aspect, feature or parameter of the disclosure should, unless the context indicates otherwise, be regarded as having been disclosed in combination with any and all preferences and options for all other aspects, features and parameters of the disclosure.

## Claims

1. An agricultural system comprising:
an agricultural baler (10) comprising a driveline, a rotatable flywheel (28) and a rotary input shaft (27), the rotary input shaft (27) being connectable by way of the baler driveline to the rotatable flywheel (28), the driveline comprising first and second heat-generating components (149, 154, 158);
a cooling fluid supply circuit (100; 200) comprising at least one pump (190; 290) for supplying cooling fluid to the first and second heat-generating components (149, 154, 158; 249, 254, 258); and
a control unit (144; 244) that is configured to:
receive driveline data indicative of a current and/or future status of at least one heat-generating component (149, 154, 158; 249, 254, 258) of the driveline;
determine a control signal for controlling an amount of cooling fluid flow provided to the first and second heat-generating components (149, 154, 158; 249, 254, 258), on the basis of the driveline data; and
provide the control signal to the cooling fluid supply circuit (100; 200), wherein the control unit (144; 244) is configured to:
determine a desired distribution of a cooling fluid flow provided by the pump (190; 290) between the first and second heat-generating components (149, 154, 158; 249, 254, 258), on the basis of the driveline data; and
determine the control signal on the basis of the desired distribution of cooling flow; wherein
the fluid supply circuit (100; 200) has a first fluid supply mode, in which at least one heat-generating component (149, 154, 158; 249, 254, 258) of the driveline is supplied with cooling fluid at first cooling fluid flow rate, and a second fluid supply mode, in which the at least one heat-generating component (149, 154, 158; 249, 254, 258) is supplied with cooling fluid at a second cooling fluid flow rate, and wherein the first cooling fluid flow rate is higher than the second cooling fluid flow rate; and
the control signal puts the fluid supply circuit (100; 200) in the first fluid supply mode or the second fluid supply mode, wherein the first cooling fluid flow rate is between 4 and 10 times higher than the second cooling fluid flow rate; and in that the cooling fluid supply circuit (100; 200) includes two fluid flow control components (104, 106; 202, 204, 206) that are flow reducing devices and are respectively capable of being bypassed by the cooling fluid flowing in the fluid supply circuit (100; 200).

2. The agricultural system of Claim 1, wherein the at least one heat-generating component (149, 154, 158; 249, 254, 258) comprises a clutch (49, 54), and wherein the driveline data comprises a current and/or future engagement status of the clutch (49, 54).

3. The agricultural system of Claim 2, wherein the driveline includes a transmission (38) including driveline components defining at least first and second selectable transmission ratios (G1, G2) between the input shaft (27) and the flywheel (28), wherein the clutch (49, 54) is useable for selecting the first and/or second selectable transmission ratios (G1, G2).

4. The agricultural system of any of Claims 1 to 3, wherein the at least one heat-generating component (149, 154, 158; 249, 254, 258) comprises a brake (58), and wherein the driveline data comprises a current and/or future activation status of the brake (58).

5. The agricultural system of any of Claims 1 to 4, wherein the driveline data comprises one or more of the following:
input power data indicative of external input power provided to the agricultural baler (10);
transmission-control signals indicative of a requested change in transmission ratio (G1, G2);
engagement data indicative of an engagement status of the at least one heat-generating component; and
safety stop data indicative of safety shut downs required due to a baler failure.

6. The agricultural system of Claim 1, wherein the first cooling fluid flow rate is between 22 I/min and 25 I/min, and/or wherein the second cooling fluid flow rate is between 3 I/min and 5 I/min.

7. The agricultural system of Claim 1, wherein
in the first fluid supply mode, the first heat-generating component is supplied with cooling fluid at the first cooling fluid flow rate and the second heat-generating component is supplied with cooling fluid at the second cooling fluid flow rate, and/or
wherein, in the second fluid supply mode, the first heat-generating component is supplied with cooling fluid at the second cooling fluid flow rate and the second heat-generating component is supplied with cooling fluid at the first cooling fluid flow rate.

8. The agricultural system of any of Claim 1 or Claim 7, wherein
the fluid supply circuit (100; 200) comprises a third fluid supply mode, in which the first and the second heat-generating components are supplied with cooling fluid at substantially the same cooling flow rate, particularly the second cooling flow rate; and
wherein the control signal puts the fluid supply circuit (100; 200) in third fluid supply mode.

9. The agricultural system of any of Claims 1 to 8, wherein the pump (190; 290) is a fixed displacement pump.

10. The agricultural system of any of Claims 1 to 9 comprising an agricultural work vehicle connected to the agricultural baler (10).

11. A computer-implemented method for controlling an agricultural baler, said baler (10) comprising:
a rotary input shaft (27) connectable by way of a baler driveline to a rotatable flywheel (28), the driveline comprising first and second heat-generating components (149, 154, 158; 249, 254, 258); and
a fluid supply circuit (100; 200) comprising a pump (190; 290) for supplying cooling fluid to the first and second heat-generating components (149, 154, 158; 249, 254, 258);
wherein the method comprises:
receiving driveline data indicative of a current and/or future status of the first and second heat-generating components (149, 154, 158; 249, 254, 258) of the driveline;
determining a control signal for controlling an amount of cooling fluid flow provided to the first and second heat-generating components (149, 154, 158; 249, 254, 258), on the basis of the driveline data; and
providing the control signal to a cooling fluid supply circuit (100; 200), the method including:
determining a desired distribution of a cooling fluid flow provided by the pump (190; 290) between the first and second heat-generating components, on the basis of the driveline data; and
determining the control signal on the basis of the desired distribution of cooling flow; wherein
the fluid supply circuit (100; 200) has a first fluid supply mode, in which at least one heat-generating component (149, 154, 158; 249, 254, 258) of the driveline is supplied with cooling fluid at first cooling fluid flow rate, and a second fluid supply mode, in which at least one of the first and second heat-generating components (149, 154, 158; 249, 254, 258) is supplied with cooling fluid at a second cooling fluid flow rate, and wherein the first cooling fluid flow rate is higher than the second cooling fluid flow rate; and
the control signal puts the fluid supply circuit (100; 200) in the first fluid supply mode or the second fluid supply mode, wherein the first cooling fluid flow rate is between 4 and 10 times higher than the second cooling fluid flow rate; and in that the cooling fluid supply circuit (100; 200) includes two fluid flow control components (104, 106; 202, 204, 206) that are flow reducing devices, the method including bypassing at least one of the two cooling fluid flow control components (104, 106; 204, 206) when the fluid supply circuit is in the first fluid supply mode whereby to supply unrestricted flow of the cooling fluid to at least one of the first and second heat-generating components (149, 154, 158; 249, 254, 258).

## Patentansprüche

1. Landwirtschaftliches System, umfassend:
eine landwirtschaftliche Ballenpresse (10), umfassend einen Antriebsstrang, ein drehbares Schwungrad (28) und eine drehende Eingangswelle (27), wobei die drehende Eingangswelle (27) über den Ballenpressenantriebsstrang mit dem drehbaren Schwungrad (28) verbindbar ist, wobei der Antriebsstrang erste und zweite wärmeerzeugende Komponenten (149, 154, 158) umfasst;
einen Kühlflüssigkeitsversorgungskreis (100; 200), der mindestens eine Pumpe (190; 290) zum Versorgen der ersten und zweiten wärmeerzeugenden Komponenten (149, 154, 158; 249, 254, 258) mit Kühlflüssigkeit umfasst; und
eine Steuereinheit (144; 244), die konfiguriert ist zum:
Empfangen von Antriebsstrangdaten, die einen aktuellen und/oder zukünftigen Status mindestens einer wärmeerzeugenden Komponente (149, 154, 158; 249, 254, 258) des Antriebsstrangs anzeigen;
Bestimmen eines Steuersignals zum Steuern einer Menge eines Kühlflüssigkeitsstroms, der den ersten und zweiten wärmeerzeugenden Komponenten (149, 154, 158; 249, 254, 258) bereitgestellt wird, auf der Grundlage der Antriebsstrangdaten und
Bereitstellen des Steuersignals an den Kühlflüssigkeitsversorgungskreis (100; 200), wobei die Steuereinheit (144; 244) konfiguriert ist zum:
Bestimmen einer gewünschten Verteilung eines Kühlflüssigkeitsstroms, der von der Pumpe (190; 290) bereitgestellt wird, zwischen den ersten und zweiten wärmeerzeugenden Komponenten (149, 154, 158; 249, 254, 258) auf der Grundlage der Antriebsstrangdaten und
Bestimmen des Steuersignals auf der Grundlage der gewünschten Verteilung von Kühlstrom; wobei
der Flüssigkeitsversorgungskreis (100; 200) einen ersten Flüssigkeitsversorgungsmodus, bei dem mindestens eine wärmeerzeugende Komponente (149, 154, 158; 249, 254, 258) des Antriebsstrangs mit Kühlflüssigkeit mit einer ersten Kühlflüssigkeitsströmungsgeschwindigkeit versorgt wird, und einen zweiten Flüssigkeitsversorgungsmodus aufweist, bei dem die mindestens eine wärmeerzeugende Komponente (149, 154, 158; 249, 254, 258) mit Kühlflüssigkeit mit einer zweiten Kühlflüssigkeitsströmungsgeschwindigkeit versorgt wird, und wobei die erste Kühlflüssigkeitsströmungsgeschwindigkeit höher als die zweite Kühlflüssigkeitsströmungsgeschwindigkeit ist; und
das Steuersignal den Flüssigkeitsversorgungskreis (100; 200) in den ersten Flüssigkeitsversorgungsmodus oder den zweiten Flüssigkeitsversorgungsmodus versetzt, wobei die erste Kühlflüssigkeitsströmungsgeschwindigkeit zwischen 4 und 10 mal höher als die zweite Kühlflüssigkeitsströmungsgeschwindigkeit ist; und dadurch, dass der Kühlflüssigkeitsversorgungskreis (100; 200) zwei Flüssigkeitsströmungssteuerkomponenten (104, 106; 202, 204, 206) einschließt, die strömungsreduzierende Vorrichtungen sind und jeweils von der in dem Flüssigkeitsversorgungskreis (100; 200) strömenden Kühlflüssigkeit umgangen werden können.

2. Landwirtschaftliches System nach Anspruch 1, wobei die mindestens eine wärmeerzeugende Komponente (149, 154, 158; 249, 254, 258) eine Kupplung (49, 54) umfasst und wobei die Antriebsstrangdaten einen aktuellen und/oder zukünftigen Eingriffsstatus der Kupplung (49, 54) umfassen.

3. Landwirtschaftliches System nach Anspruch 2, wobei der Antriebsstrang ein Getriebe (38) einschließt, das Antriebsstrangkomponenten einschließt, die mindestens ein erstes und zweites wählbares Übersetzungsverhältnisse (G1, G2) zwischen der Eingangswelle (27) und dem Schwungrad (28) definieren, wobei die Kupplung (49, 54) zum Auswählen des ersten und/oder zweiten wählbaren Übersetzungsverhältnisses (G1, G2) verwendbar ist.

4. Landwirtschaftliche System nach einem der Ansprüche 1 bis 3, wobei die mindestens eine wärmeerzeugende Komponente (149, 154, 158; 249, 254, 258) eine Bremse (58) umfasst und wobei die Antriebsstrangdaten einen aktuellen und/oder zukünftigen Aktivierungsstatus der Bremse (58) umfassen.

5. Landwirtschaftliches System nach einem der Ansprüche 1 bis 4, wobei die Antriebsstrangdaten eines oder mehrere der folgenden umfassen:
Eingangsleistungsdaten, die eine externe Eingangsleistung anzeigen, die der landwirtschaftlichen Ballenpresse (10) bereitgestellt wird;
Getriebesteuerungssignale, die eine angeforderte Änderung des Übersetzungsverhältnisses (G1, G2) anzeigen;
Eingriffsdaten, die einen Eingriffsstatus der mindestens einen wärmeerzeugenden Komponente anzeigen; und
Sicherheitsstoppdaten, die auf erforderliche Sicherheitsabschaltungen aufgrund eines Ballenpressenausfalls hinweisen.

6. Landwirtschaftliches System nach Anspruch 1, wobei die erste Kühlflüssigkeitsströmungsgeschwindigkeit zwischen 22 l/min und 25 l/min liegt und/oder wobei die zweite Kühlflüssigkeitsströmungsgeschwindigkeit zwischen 3 l/min und 5 I/min liegt.

7. Landwirtschaftliches System nach Anspruch 1, wobei
in dem ersten Flüssigkeitsversorgungsmodus die erste wärmeerzeugende Komponente mit Kühlflüssigkeit mit der ersten Kühlflüssigkeitsströmungsgeschwindigkeit versorgt wird und die zweite wärmeerzeugende Komponente mit Kühlflüssigkeit mit der zweiten Kühlflüssigkeitsströmungsgeschwindigkeit versorgt wird und/oder
wobei in dem ersten Flüssigkeitsversorgungsmodus die erste wärmeerzeugende Komponente mit Kühlflüssigkeit mit der zweiten Kühlflüssigkeitsströmungsgeschwindigkeit versorgt wird und die zweite wärmeerzeugende Komponente mit Kühlflüssigkeit mit der ersten Kühlflüssigkeitsströmungsgeschwindigkeit versorgt wird.

8. Landwirtschaftliches System nach einem von Anspruch 1 oder Anspruch 7, wobei
der Flüssigkeitsversorgungskreis (100; 200) einen dritten Flüssigkeitsversorgungsmodus umfasst, in dem die erste und die zweite wärmeerzeugende Komponente mit Kühlflüssigkeit mit im Wesentlichen derselben Kühlströmungsgeschwindigkeit versorgt werden, insbesondere der zweiten Kühlströmungsgeschwindigkeit, und
wobei das Steuersignal den Flüssigkeitsversorgungskreis (100; 200) in einen dritten Flüssigkeitsversorgungsmodus versetzt.

9. Landwirtschaftliches System nach einem der Ansprüche 1 bis 8, wobei die Pumpe (190; 290) eine Konstantpumpe ist.

10. Landwirtschaftliches System nach einem der Ansprüche 1 bis 9, umfassend ein landwirtschaftliches Arbeitsfahrzeug, das mit der landwirtschaftlichen Ballenpresse (10) verbunden ist.

11. Computerimplementiertes Verfahren zum Steuern einer landwirtschaftlichen Ballenpresse, wobei die Ballenpresse (10) umfasst:
eine drehende Eingangswelle (27), die über einen Ballenpressenantriebsstrang mit einem drehbaren Schwungrad (28) verbindbar ist, wobei der Antriebsstrang erste und zweite wärmeerzeugende Komponenten (149, 154, 158; 249, 254, 258) umfasst; und
einen Flüssigkeitsversorgungskreis (100; 200), der eine Pumpe (190; 290) zum Zuführen von Kühlflüssigkeit zu den ersten und zweiten wärmeerzeugenden Komponenten (149, 154, 158; 249, 254, 258) umfasst;
wobei das Verfahren umfasst:
Empfangen von Antriebsstrangdaten, die einen aktuellen und/oder zukünftigen Status der ersten und zweiten wärmeerzeugenden Komponenten (149, 154, 158; 249, 254, 258) des Antriebsstrangs anzeigen;
Bestimmen eines Steuersignals zum Steuern einer Menge eines Kühlflüssigkeitsstroms, der den ersten und zweiten wärmeerzeugenden Komponenten (149, 154, 158; 249, 254, 258) bereitgestellt wird, auf der Grundlage der Antriebsstrangdaten und
Bereitstellen des Steuersignals an einen Kühlflüssigkeitsversorgungskreis (100; 200), wobei das Verfahren einschließt:
Bestimmen einer gewünschten Verteilung eines Kühlflüssigkeitsstroms, der von der Pumpe (190; 290) bereitgestellt wird, zwischen den ersten und zweiten wärmeerzeugenden Komponenten auf der Grundlage der Antriebsstrangdaten und
Bestimmen des Steuersignals auf der Grundlage der gewünschten Verteilung von Kühlstrom; wobei
der Flüssigkeitsversorgungskreis (100; 200) einen ersten Flüssigkeitsversorgungsmodus, bei dem mindestens eine wärmeerzeugende Komponente (149, 154, 158; 249, 254, 258) des Antriebsstrangs mit Kühlflüssigkeit mit einer ersten Kühlflüssigkeitsströmungsgeschwindigkeit versorgt wird, und einen zweiten Flüssigkeitsversorgungsmodus aufweist, bei dem die mindestens eine der ersten und zweiten wärmeerzeugenden Komponenten (149, 154, 158; 249, 254, 258) mit Kühlflüssigkeit mit einer zweiten Kühlflüssigkeitsströmungsgeschwindigkeit versorgt wird, und wobei die erste Kühlflüssigkeitsströmungsgeschwindigkeit höher als die zweite Kühlflüssigkeitsströmungsgeschwindigkeit ist; und
das Steuersignal den Flüssigkeitsversorgungskreis (100; 200) in den ersten Flüssigkeitsversorgungsmodus oder den zweiten Flüssigkeitsversorgungsmodus versetzt, wobei die erste Kühlflüssigkeitsströmungsgeschwindigkeit zwischen 4 und 10 mal höher als die zweite Kühlflüssigkeitsströmungsgeschwindigkeit ist; und dadurch, dass der Kühlflüssigkeitsversorgungskreis (100; 200) zwei Flüssigkeitsströmungssteuerkomponenten (104, 106; 202, 204, 206) einschließt, die strömungsreduzierende Vorrichtungen sind, wobei das Verfahren Umgehen mindestens einer der zwei Kühlflüssigkeitsströmungssteuerkomponenten (104, 106; 204, 206) einschließt, wenn sich der Flüssigkeitsversorgungskreislauf in dem ersten Flüssigkeitsversorgungsmodus befindet, wodurch uneingeschränkte Strömung der Kühlflüssigkeit zu mindestens einer der ersten und zweiten wärmeerzeugenden Komponenten (149, 154, 158; 249, 254, 258) zugeführt wird.

## Revendications

1. Système agricole comprenant :
une presse à balles (10) agricole comprenant une chaîne cinématique, un volant d'inertie (28) rotatif et un arbre d'entrée (27) rotatif, l'arbre d'entrée (27) rotatif pouvant être relié au volant d'inertie (28) rotatif par l'intermédiaire de la chaîne cinématique de presse à balles, la chaîne cinématique comprenant des premier et second composants générateurs de chaleur (149, 154, 158) ;
un circuit d'alimentation en liquide de refroidissement (100 ; 200) comprenant au moins une pompe (190 ; 290) destinée à alimenter en liquide de refroidissement les premier et second composants générateurs de chaleur (149, 154, 158 ; 249, 254, 258) ; et
une unité de commande (144 ; 244) qui est configurée pour :
recevoir des données de chaîne cinématique indiquant un état actuel et/ou futur d'au moins un composant générateur de chaleur (149, 154, 158 ; 249, 254, 258) de la chaîne cinématique ;
déterminer un signal de commande permettant de commander une quantité de flux de liquide de refroidissement fournie aux premier et second composants générateurs de chaleur (149, 154, 158 ; 249, 254, 258), sur la base des données de chaîne cinématique ; et
fournir le signal de commande au circuit d'alimentation en liquide de refroidissement (100 ; 200), dans lequel l'unité de commande (144 ; 244) est configurée pour :
déterminer une distribution souhaitée d'un écoulement de liquide de refroidissement fourni par la pompe (190 ; 290) entre les premier et second composants générateurs de chaleur (149, 154, 158 ; 249, 254, 258), sur la base des données de chaîne cinématique ; et
déterminer le signal de commande sur la base de la distribution souhaitée du flux de refroidissement ; dans lequel
le circuit d'alimentation en liquide (100 ; 200) a un premier mode d'alimentation en liquide, dans lequel au moins un composant générateur de chaleur (149, 154, 158 ; 249, 254, 258) de la chaîne cinématique est alimenté en liquide de refroidissement à un premier débit de liquide de refroidissement, et un deuxième mode d'alimentation en liquide, dans lequel l'au moins un composant générateur de chaleur (149, 154, 158 ; 249, 254, 258) est alimenté en liquide de refroidissement à un second débit de liquide de refroidissement, et dans lequel le premier débit de liquide de refroidissement est supérieur au second débit de liquide de refroidissement ; et
le signal de commande met le circuit d'alimentation en liquide (100 ; 200) dans le premier mode d'alimentation en liquide ou le deuxième mode d'alimentation en liquide, dans lequel le premier débit de liquide de refroidissement est entre 4 et 10 fois plus élevé que le second débit de liquide de refroidissement ; et en ce que le circuit d'alimentation en liquide de refroidissement (100 ; 200) comporte deux composants de commande de flux de liquide (104, 106 ; 202, 204, 206) qui sont des dispositifs de réduction de débit et qui sont respectivement susceptibles d'être contournés par le liquide de refroidissement circulant dans le circuit d'alimentation en liquide (100 ; 200).

2. Système agricole selon la revendication 1, dans lequel l'au moins un composant générateur de chaleur (149, 154, 158 ; 249, 254, 258) comprend un embrayage (49, 54), et dans lequel les données de chaîne cinématique comprennent un état d'enclenchement actuel et/ou futur de l'embrayage (49, 54).

3. Système agricole selon la revendication 2, dans lequel la chaîne cinématique comporte une transmission (38) comportant des composants de chaîne cinématique définissant au moins des premier et second rapports de transmission (G1, G2) sélectionnables entre l'arbre d'entrée (27) et le volant d'inertie (28), dans lequel l'embrayage (49, 54) peut être utilisé pour sélectionner le premier et/ou le second rapport de transmission (G1, G2) sélectionnable.

4. Système agricole selon l'une quelconque des revendications 1 à 3, dans lequel l'au moins un composant générateur de chaleur (149, 154, 158 ; 249, 254, 258) comprend un frein (58), et dans lequel les données de chaîne cinématique comprennent un état d'activation actuel et/ou futur du frein (58).

5. Système agricole selon l'une quelconque des revendications 1 à 4, dans lequel les données de chaîne cinématique comprennent un ou plusieurs des éléments suivants :
des données de puissance d'entrée indiquant une puissance d'entrée externe fournie à la presse à balles (10) agricole ;
des signaux de commande de transmission indiquant un changement demandé de rapport de transmission (G1, G2) ;
des données d'enclenchement indiquant un état d'enclenchement de l'au moins un composant générateur de chaleur ; et
des données d'arrêt de sécurité indiquant les arrêts de sécurité nécessaires en raison d'une défaillance de la presse à balles.

6. Système agricole selon la revendication 1, dans lequel le premier débit de liquide de refroidissement est compris entre 22 l/min et 25 I/min, et/ou dans lequel le second débit de liquide de refroidissement est compris entre 3 l/min et 5 I/min.

7. Système agricole selon la revendication 1, dans lequel,
dans le premier mode d'alimentation en liquide, le premier composant générateur de chaleur est alimenté en liquide de refroidissement au premier débit de liquide de refroidissement et le second composant générateur de chaleur est alimenté en liquide de refroidissement au second débit de liquide de refroidissement, et/ou
dans lequel, dans le deuxième mode d'alimentation en liquide, le premier composant générateur de chaleur est alimenté en liquide de refroidissement au second débit de liquide de refroidissement et le second composant générateur de chaleur est alimenté en liquide de refroidissement au premier débit de liquide de refroidissement.

8. Système agricole selon l'une quelconque parmi la revendication 1 ou la revendication 7, dans lequel
le circuit d'alimentation en liquide (100 ; 200) comprend un troisième mode d'alimentation en liquide, dans lequel les premier et second composants générateurs de chaleur sont alimentés en liquide de refroidissement sensiblement au même débit de refroidissement, en particulier au second débit de refroidissement ; et
dans lequel le signal de commande met le circuit d'alimentation en liquide (100 ; 200) dans le troisième mode d'alimentation en liquide.

9. Système agricole selon l'une quelconque des revendications 1 à 8, dans lequel la pompe (190 ; 290) est une pompe volumétrique fixe.

10. Système agricole selon l'une quelconque des revendications 1 à 9, comprenant un véhicule de travail agricole relié à la presse à balles (10) agricole.

11. Procédé mis en œuvre par ordinateur, permettant de commander une presse à balles agricole, ladite presse à balles (10) comprenant :
un arbre d'entrée (27) rotatif pouvant être relié à un volant d'inertie (28) rotatif par l'intermédiaire d'une chaîne cinématique de presse à balles, la chaîne cinématique comprenant des premier et second composants générateurs de chaleur (149, 154, 158 ; 249, 254, 258) ; et
un circuit d'alimentation en liquide (100 ; 200) comprenant une pompe (190 ; 290) destinée à alimenter en liquide de refroidissement les premier et second composants générateurs de chaleur (149, 154, 158 ; 249, 254, 258) ;
dans lequel le procédé comprend :
la réception de données de chaîne cinématique indiquant un état actuel et/ou futur des premier et second composants générateurs de chaleur (149, 154, 158 ; 249, 254, 258) de la chaîne cinématique ;
la détermination d'un signal de commande permettant de commander une quantité de flux de liquide de refroidissement fournie aux premier et second composants générateurs de chaleur (149, 154, 158 ; 249, 254, 258), sur la base des données de chaîne cinématique ; et
la fourniture du signal de commande à un circuit d'alimentation en liquide de refroidissement (100 ; 200), le procédé comportant :
la détermination d'une distribution souhaitée d'un écoulement de liquide de refroidissement fourni par la pompe (190 ; 290) entre les premier et second composants générateurs de chaleur, sur la base des données de chaîne cinématique ; et
la détermination du signal de commande sur la base de la distribution souhaitée du flux de refroidissement ; dans lequel
le circuit d'alimentation en liquide (100 ; 200) a un premier mode d'alimentation en liquide, dans lequel au moins un composant générateur de chaleur (149, 154, 158 ; 249, 254, 258) de la chaîne cinématique est alimenté en liquide de refroidissement à un premier débit de liquide de refroidissement, et un deuxième mode d'alimentation en liquide, dans lequel au moins l'un parmi les premier et second composants générateurs de chaleur (149, 154, 158 ; 249, 254, 258) est alimenté en liquide de refroidissement à un second débit de liquide de refroidissement, et dans lequel le premier débit de liquide de refroidissement est supérieur au second débit de liquide de refroidissement ; et
le signal de commande met le circuit d'alimentation en liquide (100 ; 200) dans le premier mode d'alimentation en liquide ou le deuxième mode d'alimentation en liquide, dans lequel le premier débit de liquide de refroidissement est entre 4 et 10 fois plus élevé que le second débit de liquide de refroidissement ; et en ce que le circuit d'alimentation en liquide de refroidissement (100 ; 200) comporte deux composants de commande de flux de liquide (104, 106 ; 202, 204, 206) qui sont des dispositifs de réduction de débit, le procédé comportant le contournement d'au moins l'un parmi les deux composants de commande de débit de liquide de refroidissement (104, 106 ; 204, 206) lorsque le circuit d'alimentation en liquide est dans le premier mode d'alimentation en liquide de telle manière à fournir un écoulement sans restriction du liquide de refroidissement vers au moins l'un parmi les premier et second composants générateurs de chaleur (149, 154, 158 ; 249, 254, 258).
